Europäisches Patentamt

European Patent Office

Office européen des brevets

(11) Publication number: **0 377 444**
**A2**

# (12) EUROPEAN PATENT APPLICATION

(21) Application number: **90100041.4**

(22) Date of filing: **02.01.90**

(51) Int. Cl.5: **B05D 3/06, B01J 19/12,**
**B05B 3/12, B05B 15/04,**
**B05D 1/32, C03C 17/00,**
**//C03C17/32**

(30) Priority: **05.01.89 IL 88886**

(43) Date of publication of application:
**11.07.90 Bulletin 90/28**

(84) Designated Contracting States:
**AT BE CH DE ES FR GB IT LI NL SE**

(71) Applicant: **TAMGLASS OY**
**Vehmaistenkatu 5**
**SF-33730 Tampere(FI)**

(72) Inventor: **Aaron, Shafir**
**Leon Blum Street 9**
**Tel Aviv(IL)**

(74) Representative: **Patentanwälte Grünecker,**
**Kinkeldey, Stockmair & Partner**
**Maximilianstrasse 58**
**D-8000 München 22(DE)**

(54) **Method and system for applying a marking to a substrate, particulary a painted border adjacent to and around a windshield plate.**

(57) The present invention relates to a method of applying a marking to a substrate, comprising
coating the general surface of the substrate, to include the precise surface to be occupied by said marking, with a liquid substance which, when subjected to a predetermined type of electromagnetic radiation, hardens and binds itself to the substrate;
exposing the precise surface of the coated substance to be occupied by said marking to said predetermined type of electromagnetic radiation to cause said coated substance to harden and to bind itself to the substrate; and
removing the portions of said coated substance not exposed to said electromagnetic radiation.

FIG.1

WP

EP 0 377 444 A2

## METHOD AND SYSTEM FOR APPLYING A MARKING TO A SUBSTRATE, PARTICULARLY A PAINTED BORDER ADJACENT TO AND AROUND A WINDSHIELD PLATE

The present invention relates to a method and system for applying a marking to a substrate. The invention is particularly useful for applying a painted border adjacent to and around a windshield plate, and is therefore described below with respect to this application.

Up to recent years, the motor vehicle windshield was generally mounted to the motor vehicle body by the use of a grommet or sealing ring applied along the outer border of the windshield and received in the windshield opening of the vehicle body. The application of such a grommet to the windshield, done manually, was found difficult to automate. In recent years, this manually applied grommet has been replaced in many motor vehicles by a painted border applied adjacent to and around the windshield. This painted border, of an opaque plastic material, serves as an adhesive for binding the windshield to the body, as a seal for preventing water from seeping through the joint between the windshield and the vehicle body, and as a decoration strip around the windshield.

The conventional way of applying such a painted border adjacent to and around the windshield is by painting through a silk-screen. Such a silk-screen process, however, is usually done manually; moreover, it requires a separate pattern or mask for each shape and size of windshield, and also requires a substantial period of time and/or material to apply the complete border.

An object of the present invention is to provide a method and system for applying a painted border adjacent to and around a windshield plate, which method and system are more conducive to automation than the conventional silk-screen technique.

According to the present invention, there is provided a method of applying a painted border adjacent to and around a windshield plate, comprising the following operations: (a) coating the general surface adjacent to and around the outer edge of the windshield plate, to include the precise surface to be occupied by said painted border, with a liquid substance which, when subjected to a predetermined type of electromagnetic radiation, hardens and binds itself to the windshield plate; (b) exposing the precise surface of the coated substance to be occupied by said painted border to said predetermined type of electromagnetic radiation to cause said coated substance to harden and to bind itself to the windshield plate; and (c) removing the portions of said coated substance not exposed to said electromagnetic radiation.

Preferably, the electromagnetic radiation used in the exposing operation is ultraviolet radiation, and said liquid substance used in the coating operation is one which hardens and binds itself to the windshield plate when subjected to ultraviolet radiation.

In the described preferred embodiment, the coating operation is effected by spray coating the general surface adjacent to and around the outer edge of the windshield plate by a spraying head which is moved around the outer edge of the windshield plate.

In one described embodiment, the exposing operation is effected by projecting the electromagnetic radiation onto the coated windshield plate through a mask which is transparent to electromagnetic radiation only at the portion thereof corresponding to the precise surface to be occupied by the painted border. Other embodiments are described, however, wherein the source of electromagnetic radiation is a laser, in which the exposure is effected by deflecting the laser beam around the outer edge of the windshield plate, or by moving the laser beam around the outer edge of the windshield plate.

The invention also provides a system for applying a painted border adjacent to and around a windshield plate, which system includes coating apparatus, exposing apparatus, and washing apparatus, for performing the above-described operations.

The method and system of the present invention thus more easily lend themselves to automation than the conventional silk-screen process, and thereby enable windshields to be produced with the painted border in volume, at lower cost, and with less manual input, than the present conventional silk-screen process.

Further features and advantages of the invention will be apparent from the description below.

The invention is herein described, by way of example only, with reference to the accompanying drawings, wherein:

Figs. 1 and 1a-1c illustrate four stages in the method of applying a painted border adjacent to and around a windshield plate in accordance with the present invention;

Fig. 2 illustrates an overall system for applying a painted border adjacent to and around a windshield plate in accordance with the method of Figs. 1 and 1a-1c;

Figs. 3a, 3b and 3c are side, end and plan views respectively, illustrating the coating machine in the system of Fig. 2;

Fig. 4 is an enlarged fragmentary view illustrating the positioning device in the coating machine, a similar positioning device being also included in the radiation-exposing machine;

Figs. 5a and 5b are end and side views respectively, illustrating the radiation-exposing machine in the system of Fig. 2;

Figs. 6a, 6b and 6c diagrammatically illustrate different arrangements for making the exposure in the radiation-exposing machine;

Figs. 7a and 7b are diagrammatic side and end views, respectively, illustrating the washing machine in the system of Fig. 2;

Fig. 8 is a block diagram illustrating the overall automatic control of the system of Fig. 2;

Fig. 9 is a block diagram illustrating the automatic control of the coating machine; and

Fig. 10 is a block diagram illustrating the control of the radiation-exposing machine.

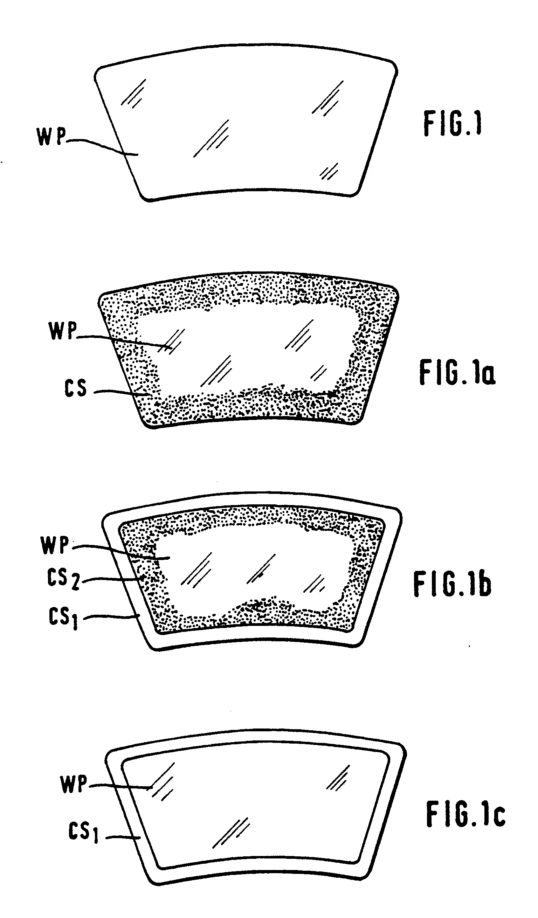

With reference first to Figs. 1 and 1a-1c, these figures illustrate the various stages in producing a plate having a painted border applied adjacent to and around its outer edge in accordance with the present invention, which plate is to be subsequently used for making a windshield. Thus, Fig. 1 illustrates the windshield plate, therein designated WP, after it has been cut and ground to proper size and configuration but before the painted border has been applied adjacent to and around its outer edge. As described earlier, such a painted border, presently applied by a silk-screen technique, is used for bonding the windshield to the vehicle body and also for sealing this bond against the entry of water.

In accordance with the present invention, this painted border is applied in the following manner as illustrated in Figs. 1b-1c, respectively.

As shown in Fig. 1a, the general surface of the windshield plate adjacent to and around its outer edge, including the precise surface to be occupied by the painted border, is coated with a liquid substance, as shown at CS, which, when subjected to a specific type of electromagnetic radiation, e.g., ultraviolet or infrared radiation, hardens and binds itself to the windshield plate WP. Such a coating may be applied imprecisely so long as it completely coats at least the precise surface to be occupied by the painted border.

The precise surface of the windshield plate WP to be occupied by the painted border is then exposed to the selected type of electromagnetic radiation, e.g., ultraviolet light, as shown in Fig. 1b; this causes the coated substance CS to harden along this precise border, indicated at $CS_1$, and to bind itself to the windshield plate. The remaining portion of the coated substance not exposed to the electromagnetic radiation, indicated as $CS_2$, does not harden nor bind itself to the windshield plate.

The next operation, as shown in Fig. 1c, is to remove, by washing away, the portions of the coated substance (portion $CS_2$ of Fig. 1b) which had not been exposed to the electromagnetic radiation, thereby leaving the coated substance $CS_1$ which had been exposed, and which as a consequence had hardened and had become bonded to the windshield plate.

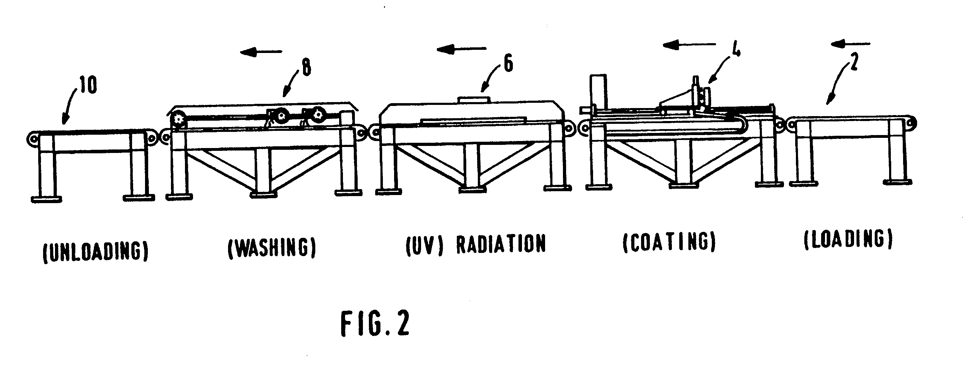

Fig. 2 illustrates a system which may be used for performing the above-described operations illustrated in Figs. 1a-1c. Briefly, the system illustrated in Fig. 2 comprises a loader 2 on which the windshield plates WP are initially loaded, a coating machine, generally designated 4, for performing the coating operation described above with respect to Fig. 1a; a radiation machine, generally designated 6, for performing the radiation-exposing operation as described above with respect to Fig. 1b; a washing machine 8 for performing the washing operation as described above with respect to Fig. 1c; and an unloader 10 for unloading the windshield plates with the painted border applied adjacent to and around its outer edge, as illustrated in Fig. 1c. Each of the above machines includes conveyor belts under the control of a computer for automatically feeding the windshield plate from one machine to the next and for automatically controlling the coating, exposing and washing operations.

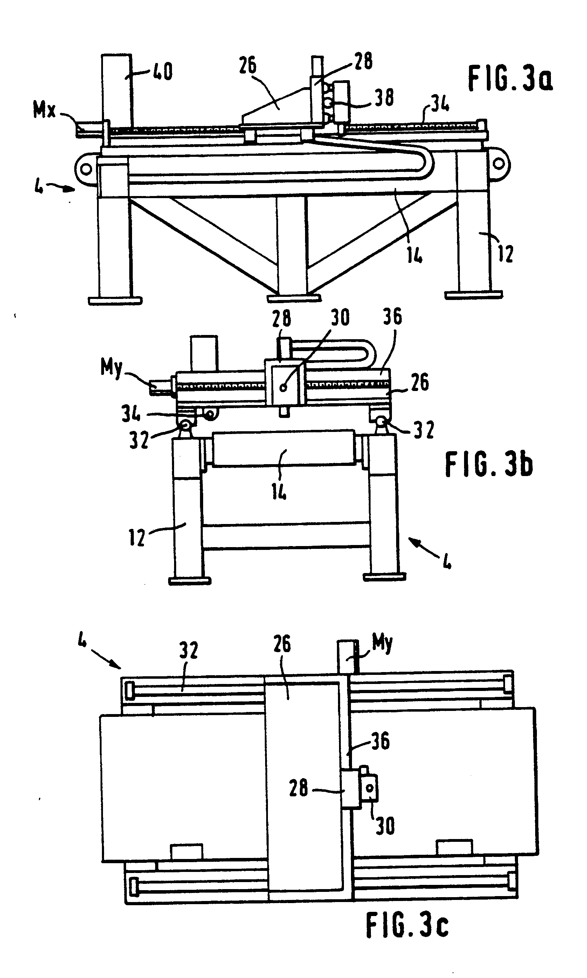

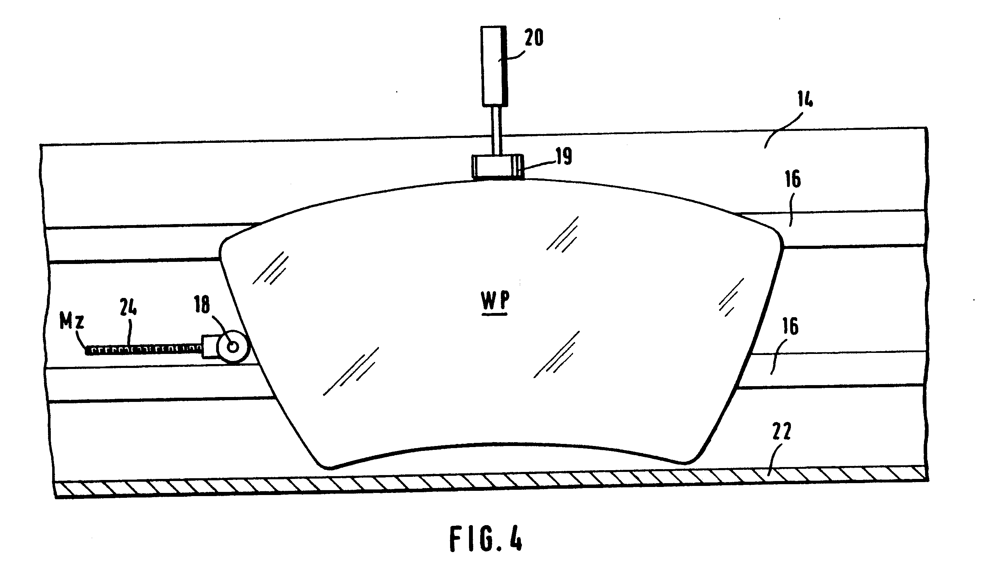

The coating machine 4, as shown in Figs. 3a-3c and 4, includes a base 12 supporting a horizontal table 14 which receive the windshield plates to be coated by the machine. A pair of conveyor belts 16 (Fig. 4) pass over the upper surface of table 14 to convey each windshield plate to a coating station on the table as defined by the position of a roller 18 engageable with the leading edge of the windshield plate WP when fed by the conveyor belts 16. When the windshield plate WP is properly positioned in the coating station by roller 18, preferably in the center of table 14, it is clamped in this position by means of a piston 19 movable with respect to a cylinder 20 and engageable with the upper surface of the windshield plate to press it against a wall 22 at the opposite side of the table.

Roller 18 is selectively positionable to the proper location, according to the particular size and configuration of the windshield plate being processed, by a feed screw 24 which may be automatically controlled as will be described below. Wall 22 engageable with the lower end of the windshield plate WP is preferably made of a suitable plastic material, such as "Teflon" (Reg. T.M.).

A bridge 26 is mounted over the upper face of horizontal table 14 and is movable along the X-axis, i.e., longitudinally of the table. Another carriage 28 is supported by carriage 26 and is movable along the Y-axis, i.e., transversely of the table. The Y-axis carriage 28 carries a sprayer head 30 overlying the upper face of the table and selectively positionable at any point with respect to it by selectively moving the X-axis carriage 26 and Y-axis carriage 28.

The X-axis carriage 26 is supported by a pair of rails 32 on the opposite sides of table 14, and is selectively positionable with respect to the table by a feed screw 34 turned by an X-motor Mx. The Y-axis carriage 28 is mounted on a rail 36 extending transversely along one side of the X-axis carriage 26, and is selectively positionable along the Y-axis of the table 14 by a Y-axis motor My. A third motor, labeled Mz is used for driving the feed screw 24 to control the position of the stop roller 28, and thereby of the windshield plate in the coating station, according to the size and configuration of the windshield then being produced.

Sprayer head 30 is supplied with the coating substance from a supply container 40.

It will thus be seen that when a windshield plate WP is in the coating station on the upper face of horizontal table 14, as determined by stop roller 18 (Fig. 4), and is clamped in position by piston 19 pressing the plate against wall 22, sprayer head 30 may be moved to any selected position over the windshield plate by employing the X-axis motor Mx and the Y-axis motor My to spray the coating substance contained within container 40 in any desired pattern over the upper face of the windshield plate. As described above with reference to Fig. 1a, sprayer head 30 is controlled to spray the coating substance in the form of the imprecise border adjacent to and around the outer edge of the windshield plate, as indicated by border CS in Fig. 1a. This painted region CS covers a sufficient amount of the outer edge around the plate to assure that it includes at least the complete surface of the plate to be occupied by the desired border $CS_1$ of Fig. 1b. Accordingly, precise control of the sprayed pattern is not required.

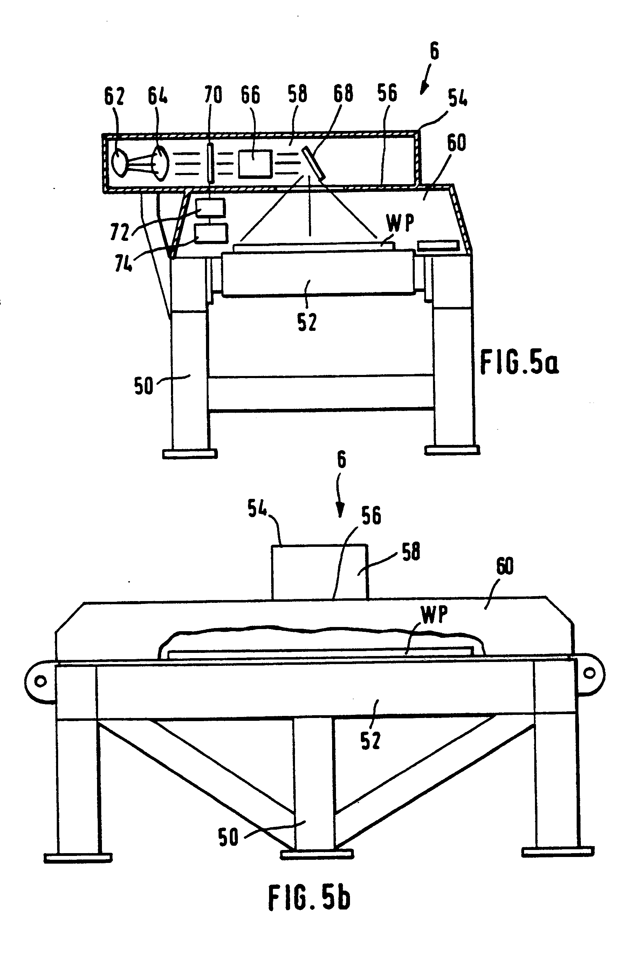

After the imprecise border CS (Fig. 1a) of coating substance has been thus applied to the windshield plate WP in the coating machine 4, the windshield plate is advanced to the radiation-exposure machine 6 illustrated in Figs. 5a and 5b which exposes the precise surface of the windshield plate to be occupied by the painted border to a specific type of electromagnetic radiation (e.g., ultraviolet or infrared) which causes the coating substance to harden and to bind itself to the windshield plate.

The coating substance may be any one of the known UV curable liquids presently used for painting the black border around the windshield. Its viscosity must be low enough as as to be sprayable, and it should be soluble in a solvent in the liquid state but insoluble in the same solvent in the solid state. Examples of such materials are modified acrylates and materials described in US Patent 4,100,141. A suitable solvent is isopropylene.

Other forms of radiation, other than ultraviolet light, may be used to harden the coating. For example, alphaoctadecylacrylic acid that has been slightly polymerized with ultraviolet light can be polymerized (hardened) with an election beam, and poly(2,3-dichloro-1-propyl acrylate) can be polymerized (hardened) with an X-ray beam.

Radiation machine 6 illustrated in Figs. 5a and 5b also includes a base 50 supporting a horizontal table 52 adapted to receive the windshield plate WP fed to it from the coating machine 4. The upper face of table 52 of the radiation machine is similarly constructed as the upper face of table 14 of the coating machine, as illustrated in Fig. 4, to include the conveyor belts 16 for conveying the windshield plate over the upper face of the table, the selectively-positionable roller 18 for fixing the position of the windshield plate, and the piston 19 for clamping the windshield plate between it and wall 22 on the opposite side of the table.

The radiation machine illustrated in Figs. 5a and 5b further includes a housing 54 overlying table 52. Housing 54 is divided by a partition 56 into an upper compartment 58 containing the optical system including the source of the electromagnetic radiation, and a lower compartment 60 through which the electromagnetic radiation is directed onto the upper face of the windshield plate WP supported on table 52.

The optical system within compartment 58 includes a source of electromagnetic radiation 62, a collimating lens 64, a lens system 66, and a deflector mirror 68, for deflecting the electromagnetic radiation to the windshield plate WP within compartment 60. A mask 70 is interposed between lenses 64 and 66 and is formed with the precise pattern of the painted border ($CS_1$, Fig. 1b) to be applied to the windshield plate. Thus, mask 70 would be transparent to the electromagnetic radiation from source 62 at the portions of the mask corresponding to the precise border $CS_1$ to be applied, and is opaque with respect to the remaining portions. Partition 56 shields the windshield plate WP from all extraneous light, i.e., all light except that emanating from the electromagnetic source 62 and passing through mask 70.

Radiation machine 6 illustrated in Figs. 5a and 5b further includes a holder 72 for holding a plurality of masks 70 having border patterns corresponding to different sizes and configurations of windshield plates that may be processed by the system. Any desired mask may be selected by a selector device, which may be similar to that used in a conventional slide selector and which is schematically indicated at 74, for introduction between the lenses 64 and 66.

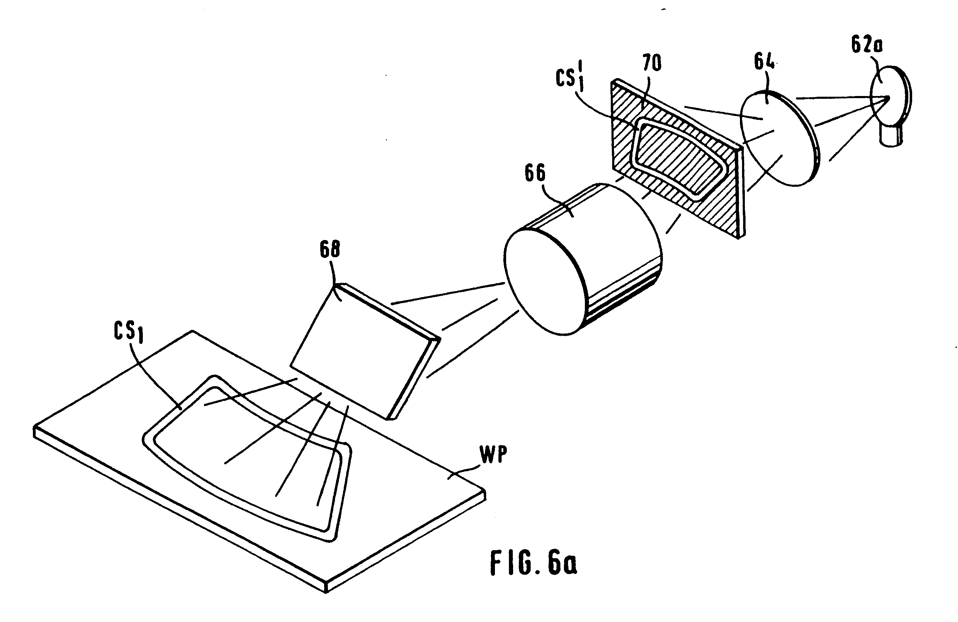

The above-described elements in the optical system illustrated in Fig. 5a are more particularly shown in Fig. 6a, wherein it will be seen that electromagnetic radiation, e.g., ultraviolet light, from light source 62a is passed through collimating lens 64, mask 70, and lens system 66 before it is deflected by mirror 68 onto the upper face of the windshield plate WP. The exposure pattern $CS_1'$ produced is precisely the transparent portion $CS_1'$ of the mask 70. In this case, the complete exposure pattern is produced in one slot at the time of energization of light source 62a, and therefore the light source should be of high power.

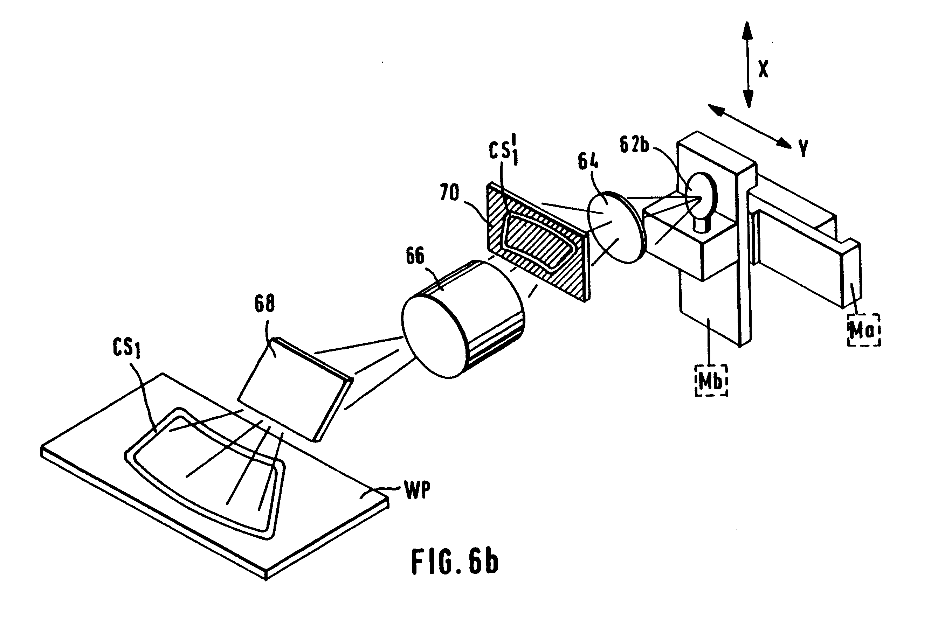

Fig. 6b illustrates another optical system which may be used, wherein the exposure pattern is not produced at one time with the exposure of the light source 62, but rather is produced by moving light source around the exposure pattern $CS_1$ formed in the mask 70, thereby obviating the need for a high-power light source. For this purpose, the light source 62b illustrated in Fig. 6b is mounted for movement along the X-axis by a motor schematically shown at Ma, and also along the Y-axis by another motor schematically shown at Mb. The latter two motors thus control the light source so as to follow the exposure pattern $CS_1'$ in mask 70 in order to trace that exposure pattern on the upper face of the windshield plate WP.

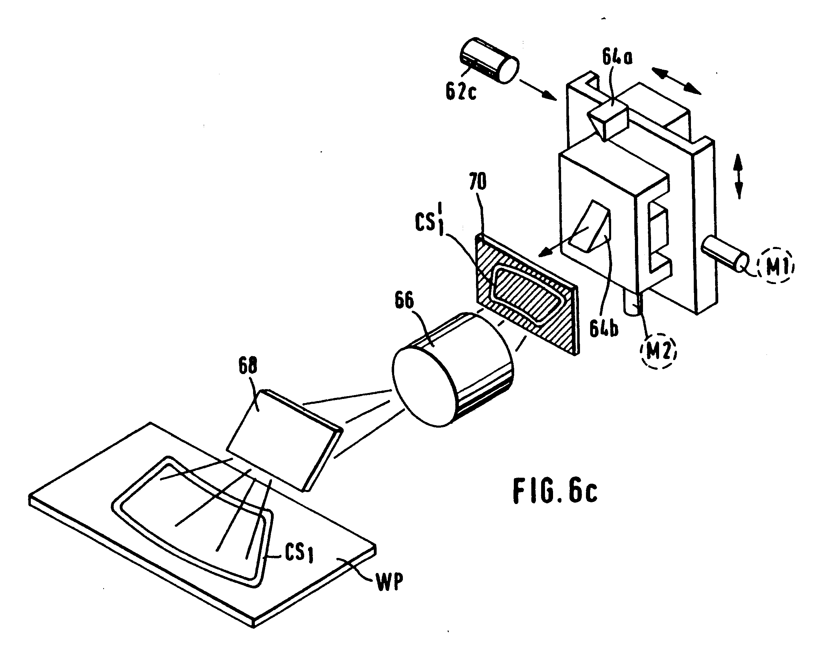

Fig. 6c illustrates another system which may be used for exposing the precise pattern on the windshield plate WP. In this case, the optical source 62c, preferably a laser, produces a beam which is deflected by a pair of mirrors 64a, 64b to trace the pattern $CS_1'$ in the mask 70. The laser beam outputted by laser 62c can thus be deflected along both the X and Y-axes by controlling the deflector mirror 64a, 64b via their drive motors $M_1$, $M_2$.

In both the Fig. 6b arrangement wherein the light source is moved to trace the pattern, and in Fig. 6c where the light beam (e.g., laser beam) is deflected to trace the desired pattern a relatively wide beam may be used since the pattern is precisely defined by the mask 70. If a narrow-beam light source, particularly a laser beam, is used, mask 70 may be omitted from the arrangements illustrated in both Figs. 6b and 6c. For example, when using a laser, the laser itself may be driven by the X-Y drive motors Ma, Mb (Fig. 6b), or its beam may be deflected by the mirrors 64a, 64b as controlled by the X-Y motors Ma, Mb, to trace the pattern directly on the face of the windshield plate WP without the use of the mask 70.

After the windshield plate has been sprayed with the imprecise pattern CS (Fig. 1a) in the spraying machine 4, and exposed to the precise pattern $CS_1$ (Fig. 1b) in the radiation machine 6, the windshield plate is then fed to the washing machine 8, which washes away the portions of the coated substance $CS_2$ outside of the desired pattern, leaving only the desired pattern $CS_1$ as illustrated in Fig. 1c.

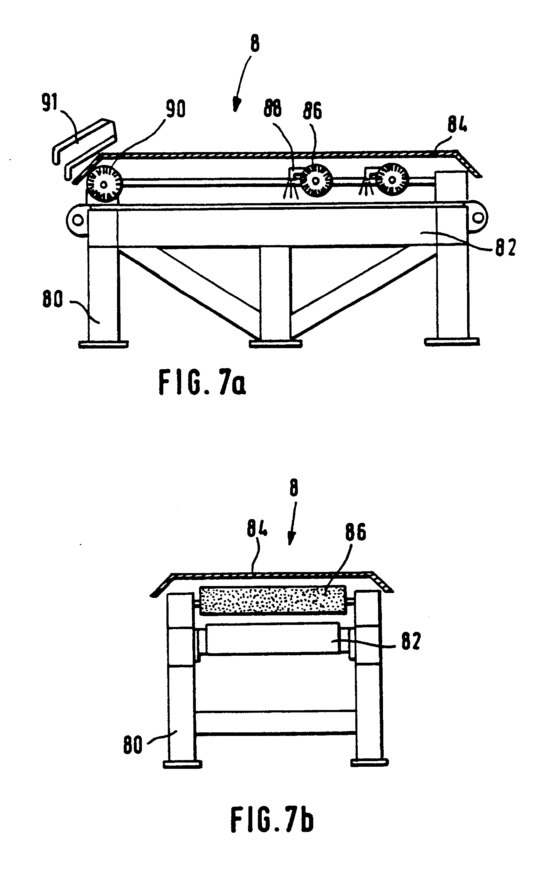

The washing machine 8, as more particularly illustrated in Figs. 7a and 7b, comprises a base 80 supporting a horizontal table 82 for receiving the windshield plate WP which is moved thereacross by conveyor belts (not shown), similar to the conveyor belts 16 in Fig. 4. The washing machine 8 includes a housing 84 enclosing a plurality of brushes 86 each having a nozzle 88 for spraying the windshield plate with a liquid which is a solvent for the unexposed coated substance, but not for the exposed coated substance. Accordingly, the unexposed coated substance, corresponding to coating portion $CS_2$ in Fig. 1b, will be washed away in the washing apparatus, thereby leaving the coated substance $CS_1$ in the precise desired pattern bonded to the windshield plate.

The outlet end of the washing machine 8 illustrated in Figs. 7a and 7b includes a wiper roller 90 for wiping the windshield plate before it exits from the machine, and an air dryer 91 which applies warm or hot air to the windshield plate in order to completely dry it as it leaves the washing machine.

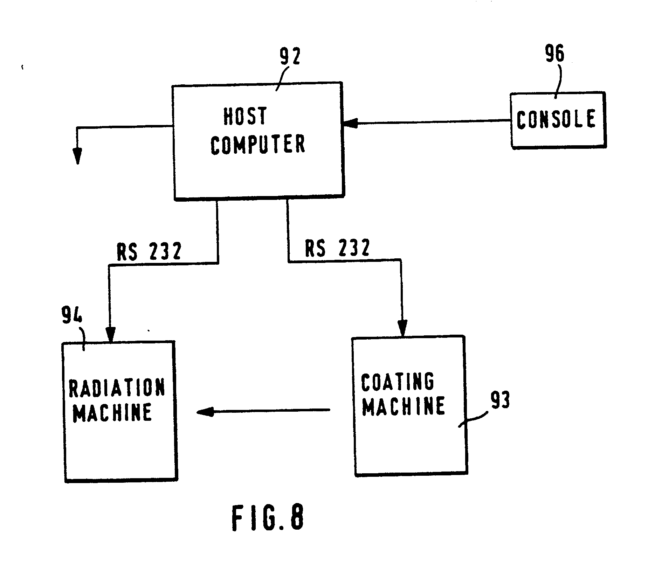

Fig. 8 is a block diagram illustrating the overall control of the coating machine 4 and the radiation machine 6 by a host computer 92. Thus, a computer 93 is provided for the coating machine 4, and another computer 94 is provided for the radiation machine 6. Both computers 93 and 94 may be of a standard type used in CNC (computer numerical control) machines and communicate with the host computer 92 via standard RS 232 busses. The host computer 92 is in turn controlled by a console 96 permitting the appropriate data to be inputted into the host computer according to the size, configuration, and other parameters of the windshield plates to be processed by the system. A special computer is not required for the washing machine, but one may be provided if desired, also controlled by the host computer.

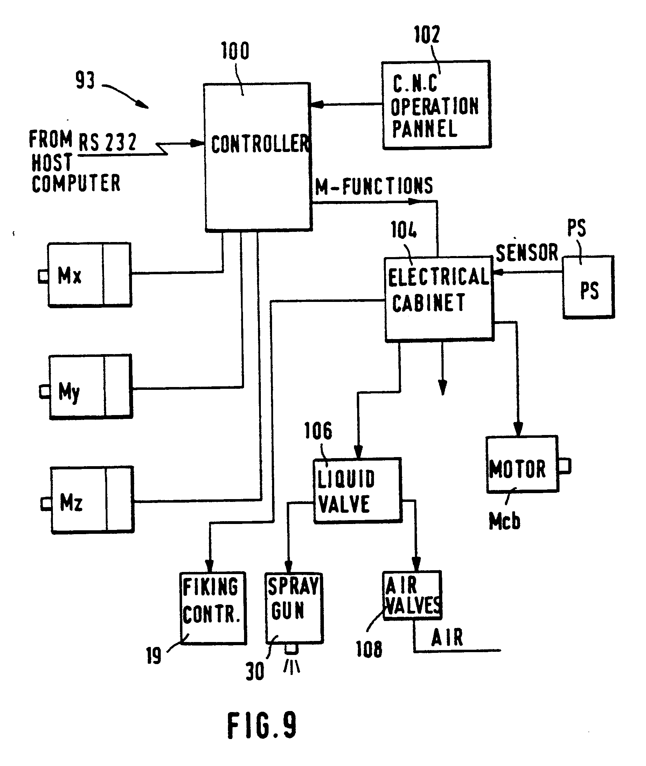

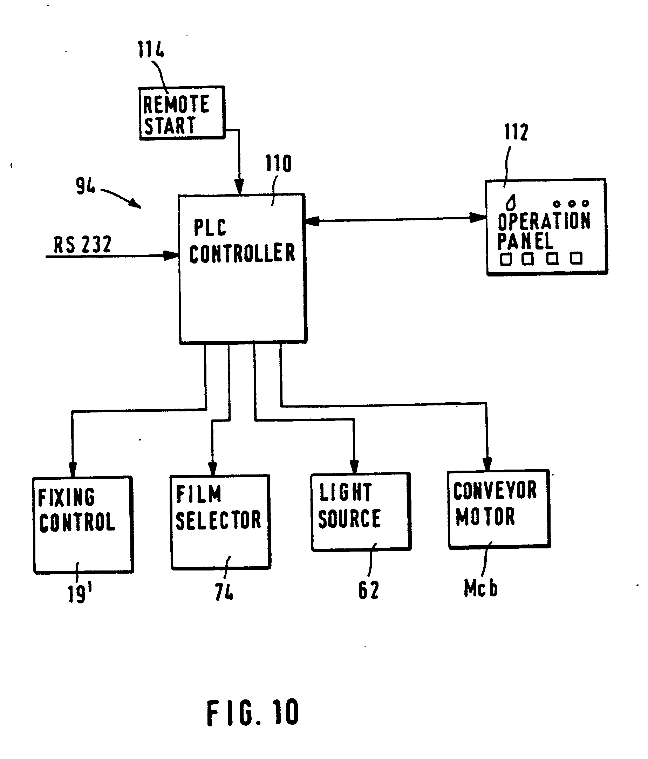

Fig. 9 illustrates the coating machine computer 93, and Fig. 10 illustrates the radiation machine computer 94.

The coating machine computer 93, as illustrated in Fig. 9, comprises a CNC controller 100 having an operation panel 102 and communicating with the host computer via the RS 232 bus. Controller 100 controls motor Mx which drives the X-axis carriage 26, and motor My which drives the Y-axis carriage 28. Controller 100 also controls motor Mz driving roller 18 (Fig. 4), via screw feeder 24, to precisely position the windshield plate WP in the coating section according to the size and configuration of the plates then being processed. The foregoing controls are effected in accordance with the data received from the host computer 92 (Fig. 8) via the RS 232 bus, as well as the data inputted via the operation panel 102 of the coating machine controller 100.

The coating machine controller 100 also controls a number of other operations, called "M-functions". Thus, the controller 100 may control via electrical cabinet 104, the clamping piston 19 for fixing the plate in the coating station, the conveyor belt motor Mcb, a liquid valve 106 controlling the supply of the liquid substance to the sprayer head 30, and an air valve 108 controlling the supply of air to the sprayer head. In addition, the coating apparatus may be provided with a position sensor PS on table 14 for sensing the correct positioning of the windshield plate in the coating station, which sensor feeds a signal to the electrical cabinet 104 causing same to control the conveyor belt motor Mcb.

The computer 94 controlling the radiation machine 6, as illustrated in Fig. 10, also includes a controller 110 having an operation panel 112 and communicating with the host computer via an RS 232 bus. Controller 110 may also have a remote start unit 114. It in turn controls the light source 62, the film selector 74 (Fig. 5a), the motor Mcb driving the conveyor belts in the radiation machine, and the piston 19′ (corresponding to piston 19, Fig. 4) for fixing the plate in position in the radiation machine.

Preferably, the above process is performed on one plate, namely the plate to constitute the outer face of the laminated windshield, before the outer plate is laiminated to the inner plate.

While the invention has been described with respect to one preferred embodiment, including various modifications, it will be appreciated that many other variations, modifications and applications of the invention may be made.

## Claims

1. A method of applying a marking to a substrate, comprising:

(a) coating the general surface of the substrate, to include the precise surface to be occupied by said marking, with a liquid substance which, when subjected to a predetermined type of electromagnetic radiation, hardens and binds itself to the substrate;

(b) exposing the precise surface of the coated substance to be occupied by said marking to said predetermined type of electromagnetic radiation to cauee said coated substance to harden and to bind itself to the substrate; and

(c) removing the portions of said coated substance not exposed to said electromagnetic radiation.

2. The method according to Claim 1, wherein the substrate is a windshield plate, and the marking is a painted border to be applied adjacent to and around the windshield plate.

3. The method according to either of Claims 1 or 2, wherein the electromagnetic radiation used in the exposing operation is ultraviolet radiation, and said liquid substance used in the coating operation is one which hardens and binds itself to the substrate when subjected to ultraviolet radiation.

4. The method according to any one of Claims 1-3, wherein said coating operation is effected by spray coating.

5. The method according to Claim 4, wherein said spray coating is applied to the general surface of the substrate by a spraying head which is moved according to the general configuration of the marking.

6. The method according to any one of Claims 1-5, wherein said exposing operation is effected by projecting the electromagnetic radiation onto the coated substance through a mask which is transparent to electromagnetic radiation only at the portion thereof corresponding to the precise surface to be occupied by said marking.

7. The method according to Claim 6, wherein the electromagnetic radiation used in the exposing operation is from a source of visible light.

8. The method according to any one of Claims 1-5, wherein the electromagnetic radiation used in the exposing operation is from a laser.

9. The method according to Claim 8, wherein the exposing operation is effected by deflecting the laser beam according to the general configuration of the marking.

10. The method according to Claim 8, wherein the exposing operation is effected by moving the laser through a path corresponding to the general configuration of the marking.

11. The method according to any one of Claims 1-10, wherein the removing operation includes the steps of spraying the substrate with a liquid which is a solvent for the unexposed coated substance, but not for the exposed coated substance, and rinsing away the unexposed portions of the coated substance.

12. A system for applying a marking to a substrate, comprising:

(a) coating apparatus for coating the general surface of the substrate, to include the precise surface to be occupied by said marking, with a liquid substance which, when subjected to a predetermined type of electromagnetic radiation, hardens and binds itself to the substrate;

(b) exposing apparatus including a source of said predetermined type of electromagnetic radiation for exposing the precise surface of the coated substance to be occupied by said marking to said radiaticn to cause said coated substance to harden and to bind itself to the substrate; and

(c) removing apparatus for removing the portions of said coated substance not exposed to said electromagnetic radiation.

13. The system according to Claim 12, wherein the substrate is a windshield plate, and said coating apparatus applies the marking as a painted border adjacent to and around the windshield plate.

14. The system according to Claim 13, wherein said coating apparatus includes a spraying head.

15. The system according to either of Claims 13 or 14, wherein said coating apparatus further includes an X-Y drive for moving the spraying head according to the configuration of the marking.

16. The system according to any one of Claims 12-15, wherein said coating apparatus further includes a conveyor belt for conveying the substrate to a coating station; a stop selectively movable to precisely position the substrate in the coating station; and a clamp for clamping the substrate in the coating station.

17. The system according to any one of Claims 12-16, wherein said exposing apparatus includes a projector for projecting the electromagnetic radiation onto the coated substance through a mask which is transparent to the electromagnetic radiation only at the portion thereof corresponding to the precise surface to be occupied by the marking.

18. The system according to Claim 17, wherein said exposing apparatus further includes a holder containing a plurality of masks, and means for selecting a mask to be projected according to the configuration of the marking to be applied to the substrate.

19. The system according to any one of Claims 12-18, wherein said exposing apparatus further includes a conveyor belt for conveying the substrate to an exposing station, a stop selectively movable to precisely position the substrate in the exposing station, and a clamp for clamping the substrate in the exposing station.

20. The system according to any one of Claims 12-19, wherein said source of electromagnetic radiation is a source of ultraviolet light.

21. The system according to any one of Claims 12-20, wherein said source of electromagnetic radiation is a source of visible light.

22. The system according to any one of Claims 12-20, wherein said source of electromagnetic radiation is a laser outputting a laser beam.

23. The system according to Claim 22, wherein said exposing apparatus further includes deflector means for deflecting the laser beam along a path corresponding to the configuration of said marking.

24. The system according to Claim 22, wherein said exposing apparatus further includes an X-Y drive for driving the laser along a path corresponding to the configuration of said marking.

25. The system according to any one of Claims 12-24, wherein said removing apparatus includes a sprayer for spraying the substrate with a liquid which is a solvent for the unexposed coated substance but not for the exposed coated substance.

26. A method of applying a painted border adjacent to and around a windshield plate substantially as described with reference to and as illustrated in the accompanying drawings.

27. A system for applying a painted border adjacent to and around a windshield plate substantially as described with reference to and as illustrated in the accompanying drawings.

FIG.1

FIG.1a

FIG.1b

FIG.1c

(UNLOADING)   (WASHING)   (UV) RADIATION   (COATING)   (LOADING)

FIG.2

EP 0 377 444 A2

FIG.3a

FIG.3b

FIG.3c

FIG.4

EP 0 377 444 A2

FIG.5a

FIG.5b

FIG.6a

FIG. 6b

EP 0 377 444 A2

FIG.6c

FIG. 7a

FIG. 7b

FIG.8

FIG.9

FIG. 10